(19) Europäisches Patentamt
European Patent Office
Office européen des brevets

(11) **EP 2 043 009 A1**

(12) **EUROPEAN PATENT APPLICATION**

(43) Date of publication:
**01.04.2009 Bulletin 2009/14**

(51) Int Cl.:
***G06F 17/30*** *(2006.01)*

(21) Application number: **07291173.8**

(22) Date of filing: **28.09.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Alcatel Lucent**
**75008 Paris (FR)**

(72) Inventors:
• **Larvet, Romain,**
**c/o Alcatel Lucent**
**75008 Paris (FR)**

• **Larvet, Philippe,**
**c/o Alcatel Lucent**
**75008 Paris (FR)**

(74) Representative: **Louiset, Raphael**
**Dejade & Biset**
**35, rue de Châteaudun**
**75009 Paris (FR)**

Remarks:
Amended claims in accordance with Rule 137(2) EPC.

(54) **Method for building semantic referential gathering semantic service descriptions**

(57) Method for building a semantic referential gathering semantic descriptions of web services, said method comprising the steps of:
- providing at least one root term selected from a semantic description of at least one web service,
- providing at least one dictionary of synonyms and/or definitions,
- searching in the dictionary for relevant terms semantically linked to the root term;
- including said relevant terms in a lexical field in connection with said web service.

FIG.2

**Description**

FIELD OF THE INVENTION

The invention relates on the Semantic Web, and more particularly to the Semantic Web services, a semantic approach to service discovery and use within the context of the Semantic Web.

BACKGROUND OF THE INVENTION

The World Wide Web is acknowledged as one of the greatest inventions of the 20th century. The Web is the greatest repository of information ever assembled by man. Its success has been built on its scalable architecture and the simplicity of its mechanisms for locating, browsing and publishing information. Web pages are hosted by numerous computers, where each document can point to other documents, either on the same or different computers. In the year 2000, estimates placed the number of web pages at over two billions.

Despite this great success, the first generation Web suffers from a number of limitations. Three of these limitations are briefly presented below.

First, the huge number of available Web pages makes it increasingly difficult for users to find and access required information or services. Although directories (such ad Yahoo! ®) and search engines (such as Google ® or Alta Vista ®) can provide some assistance, locating the right document or service is for many users still like trying to find a needle in a haystack.

Secondly, users often want to use the Web to do more than just locate a document, they want to perform some task. For example, a user might want to find the best price, plan and book a vacation to some precise place, or make a reservation at a moderately-priced restaurant within some distance of the cinema he plans to go on a certain date. Completing these tasks often involves visiting a series of pages, integrating their content and reasoning about them in some way.

Thirdly, the Web was not designed to be processed by machines. Although web pages include information that tells a computer how to display a particular piece of text or where to go when a link is clicked, they do not provide any information that helps the machine to determine what the text means. While the Web suits humans well, the mark-up of content using HTML, which is essentially a language for rendering information on screen, provides little support for automatic analysis and aggregation of information and services. The content of current Web pages is expressed via natural language and therefore the semantics is not accessible for machines. Hence, an addition to the current Web is needed to make the semantics of the Web pages machine understandable.

To address these limitations the vision of a Semantic Web has been proposed. The expression *"Semantic Web"* came up in 1998 when Tim Berners-Lee published the Roadmap to the Semantic Web on the homepage of the W3C (see also T. Berners-Lee et al, Sci. Am. 279, 2001, pp.34-43).

In the Semantic Web, web resources are annotated and languages have been developed for encoding and describing the Web content, e.g. RDF, RDF Schema, DAML+OIL, SHOE, OWL. Semantic mark-up are made using these knowledge representation language.

Annotations can be used to express formal statements about web resources, external entities, and their relationships. Semantic Web annotations go beyond familiar textual annotations about the content of the documents, such as *"clause three of this license agreement has been amended"*. This kind of informal annotation is common in word processor applications and is intended for use by document creators. Semantic annotation identifies concepts and relations between concepts in documents, and is intended primarily for use by machines. For example, a semantic annotation might relate *"polygalactouronase"* in a text to an ontology which both identifies it as the abstract concept *"enzyme"* and links it to the instance *"class EC 3.2.1.67"* of the systematic classification of the IUB (*International Union of Biochemistry).*

RDF (*Ressource Description Framework*) is a foundation for processing metadata; it provides interoperability between applications that exchanges information on the Web (D. Brickley et al, RDF Vocabulary Description Language 1.0: RDF Schema, World Wide Web Consortium, Recommendation REC-rdf-schema-2004). RDF represents data using subject-predicate-object triples (also known as "statements"). This triple representation connects data in a flexible piece-by-piece and link-by-link fashion that forms a directed labeled graph. The components of each RDF statements can be identified using URI (*Uniform Resource Identifiers*).

DAML+OIL is a result of the efforts of the DAML (DARPA *Agent Markup Language)* and OIL (*Ontology Inference Layer*), the latest version of DAML+OIL having been released as a W3C recommendation under the name OWL (F. Van Harmelen IEEE intelligent system 2002 pp.70*).* The OWL recommendation of he W3C group consists of languages of expressive power such as OWL-Lite and OWL-DL (RDF Syntax) and OWL-Full.

OWL is quite a sophisticated language, having both a RDF/XML exchange syntax and an abstract frame-like syntax, and three names sublanguages.

In order to enable agent interoperability, annotations need to be based on some particular ontology.

According to the most cited definitions of the Semantic Web literature, an ontology is an explicit specification of the conceptualization of a domain (T.R Grube,r Towards principles for the design of ontologies used for a knowledge sharing, Formal ontology in conceptual analysis and knowledge representation, Kluwer academic publishers; 1993). More specifically, an ontology may be regarded as a set of concepts regarding a given domain, gathering the concepts themselves and the relationships between the concepts.

In other words, ontologies are shared models of some domain that encode a view which is common to a set of different parties. Thus, ontologies differ from contexts that are not shared models encoding a party's view of a domain. Ontology-based semantic annotations allow to resolve anomalies in searches, e.g. if a document collection was annotated using a geographical ontology, it would become easy to distinguish "Mississippi" State from "Mississippi" river, as they would be annotated with references to different concepts in the ontology.

Shortly speaking, an ontology is the formal representation of a structured dictionary dedicated to a given domain.

A number of annotation tools for producing semantic markups exist: for instance *Amaya, Mangrove, Vannotea, OntoMat, Shoe, Smore, Open Ontology Forge, Cohse, Lixto, MnM, Melita, Parmenides, Amadillo, Knowitall, SmartWeb, Pankow, AeroSwarm, SemTag, Kim, WickOffice, AktiveDoc, SemanticWord, Magpie, Thresher.* Some of these tools include automation components which provide suggestions for annotations, but still require intervention by workers, and tools which acquire annotations automatically on a large scale. For example, *Protégé-2000* supports the creation of ontologies for the semantic web. *Onto-Annotate* include tools for both manual and semi-automatic annotation of pages. *Annotea* provides RDF-based markup but does not support information extraction. AeroDAML produces semantically marked up pages which can be checked by humans.

A major limitation of the Web services technology is that finding and composing services still requires manual effort. In order to address this problem, semantic web researchers advanced the idea of a semantic description of the functionality of the services that could facilitate their discovery and integration. More precisely, Web services are semantically described in terms of concepts provided by a domain ontology. The concepts denote entities in the domain of the Web service as well as functionalities that can be performed by services in the given domain.

The purpose of *Semantic Web services* is to make service definition machine-understandable by describing their capabilities, inputs and outputs, constraints, as well as service choreography and orchestration in formal language. Indeed, the W3C Web Service Architecture Working Group defines a Web service as "a *software application identified by an URI, whose interfaces and bindings are capable of being defined, describes and discovered* as *XML artifacts".* Sufficiently rich, machine-readable descriptions of Web services would allow the creation of novel compound Web services with little or no direct human intervention.

Two main approaches are presently under development for Semantic Web services:

- the definition of a formal conceptual model, as represented by OWL-S (OWL service language) and WSMO (Web Service Modeling Ontology). OWL-S is a set of ontologies for describing the properties and capabilities of Web services. The OWL-S process ontology provides a vocabulary for describing the composition of Web services, this ontology using an "action" or "process" metaphor for describing the service behavior;
- the extension of a syntactical description formats by defining an annotation mechanism, as represented by SAWSDL (*Semantic Annotations for Web Service Description Language*) which is XML based and is used to provide semantic annotations embedded into WSDL documents.

The WSDL document is primarily intended for use by a machine agent or a software engineer who has experience with web services. The WSDL language specifies the functionality and message of the service only at a syntactic level. While these descriptions can be automatically parsed and invoked by machines, the interpretation of their meaning is left to human programmers.

Using a WSDL Document Generator (e.g. see http://www.xmlspy.com) it is possible to generate a more attractive XHTML document. Annotations can be made manually by loading an ontology and aligning terminology mentioned in the Web page of the service by dragging and dropping it onto the loaded ontology. The result is a set of mapping rules between web services ontologies and preloaded ontologies.

Using an appropriate editor, it is then possible to write manually a semantic description of an existing service, in SAWSDL for example, and to include in this description some references to external ontologies.

In addition to semantic descriptions, there is a need for building a semantic referential in order to enable automatic discovery of web services that will match a user's request expressed in natural language.

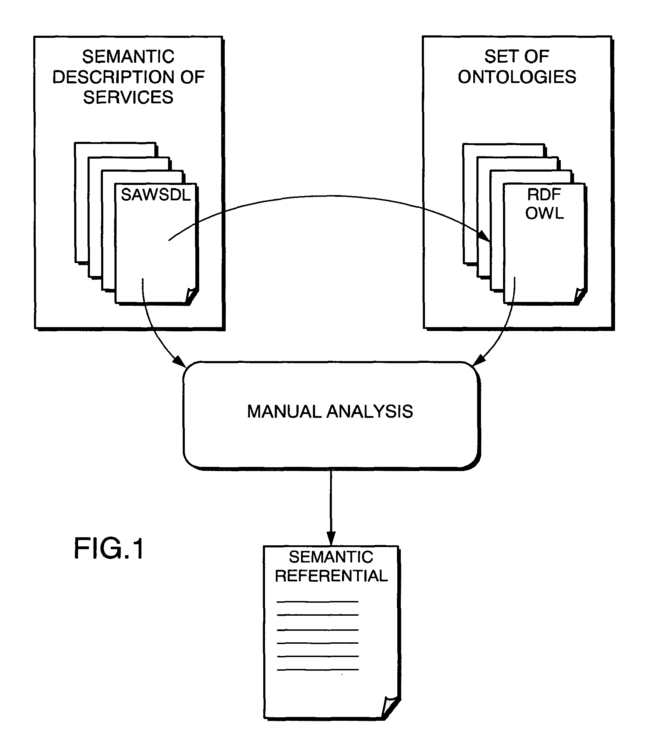

Nowadays both semantic descriptions and semantic referentials are built manually. **FIG.1** discloses how a semantic referential is ordinarily built: semantic descriptions are gathered from a semantic description of services and cross referenced with a set of available ontologies in connection with the domain. Resulting terms, considered as relevant, are listed by the analyst and fed to a semantic referential.

The fact that semantic descriptions and referentials are built manually has several disadvantages. First, it is complicated and time consuming, thereby acting as a break upon extension of the Semantic Web. Second, such a method may lead to a lack of precision due to possible misunderstandings from persons in charge of producing the semantic descriptions and referentials.

SUMMARY OF THE INVENTION

Accordingly, it is an object of the invention to permit part- or full automation of the building of Semantic Web architecture.

It is another object of the invention to permit part-or full automation of the building of semantic referentials.

Accordingly, the invention provides, according to one aspect, a method for building a semantic referential gathering semantic descriptions of web services, said method comprising the steps of:

- providing at least one root term selected from a semantic description of at least one web service,
- providing at least one dictionary of synonyms and/or definitions,
- searching in the dictionary for relevant terms semantically linked to the root term;
- including said relevant terms in a lexical field in connection with said web service.

Such a method may be implemented as a computer program on a computer system.

The above and other objects and advantages of the invention will become apparent from the detailed description of preferred embodiments, considered in conjunction with the accompanying drawings.

BRIEF DESCRIPTION OF THE DRAWINGS

FIG.1 is a diagram showing an ordinary method for manual building of a semantic referential.

FIG.2 is a diagram showing a method according to the invention for automatic building of a semantic referential.

DESCRIPTION OF PREFERRED EMBODIMENTS

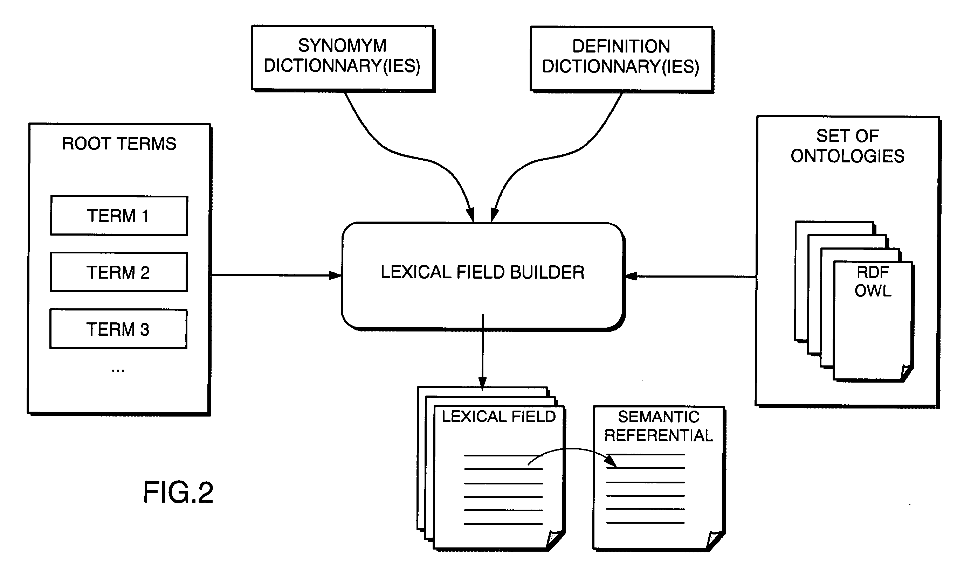

Turning now to **FIG.2,** there is shown a computer-ruled method for automatic building of a semantic referential. Such a method is practically implemented in a computer system as a computer program application called Lexical field builder.

A generic definition of a semantic referential is given hereabove in view of its goal, which consists in enabling automatic discovery of services matching a user's request expressed in natural language.

More precisely, a semantic referential is a service directory containing a set of available services, each of which is defined by a short description including a list of terms which describe the functionality of the service.

Each list of terms defines a lexical field that delineates the semantic domain of the corresponding service, such as the semantic domain of translation for a translation service. Such a lexical field is thereafter used to retrieve web services matching the natural language request in order to ascertain that the requested service will be found whichever the words the user put in his or her request to express the general idea of the expected service.

It is assumed that a semantic description of at least one (and possibly a plurality of) web service(s) is available, for example under the form of an SAWSDL document providing XML semantic annotations added to a WSDL document. Semantic annotations may be of two kinds: explicit identifier of concepts, or identifiers of mappings from WSDL to concepts or vice-versa (see e.g. W3C Recommandation of 28 August 2007 *"Semantic Annotations for WSDL and XML Schema").*

It is also assumed that those semantic descriptions refer to concepts represented in existing ontologies (e.g. under the form of a list of RDF or OWL statements). It is further assumed that such ontologies are available, i.e. the system where the method is implemented is able to access and search them.

It is finally assumed that a list of root terms is available. Root terms are relevant terms selected (upstream from the building of the semantic referential) from the semantic descriptions either manually or, preferably, automatically by means of an appropriate analysis method (implemented as a computer program), in connection with the web service(s).

The building of the semantic referential is achieved, for each root term, as follows.

First, new relevant terms semantically linked to the root term are searched by the Lexical field builder in at least one dictionary, such as a dictionary of synonyms or a dictionary of definitions. A dictionary can be defined as a (possibly large) word database. The searched dictionary(ies) may be locally implemented databases, or distant databases (such as Princeton's WordNet online dictionary, developed by Princeton Cognitive Science Laboratory and available at *http: //wordnet.princeton.edu*). Several dictionaries (synonyms and/or definitions) may be simultaneously searched and cross-referenced to find relevant terms. This dictionary search is repeated (reiterated) for each relevant term found in the dictionary(ies), until a set of relevant terms is available in association with the original root term. The search may be stopped under a predetermined condition, for example as soon as cross-references appear to be circular (in other terms probability of finding new relevant terms is low), or as soon as a predetermined number of relevant terms are found by the Lexical field builder, or after expiration of a predetermined search time.

Relevancy of the terms may be evaluated by the Lexical field builder depending of their redundancy during the dictionary search. In other terms, the more a word is found in the dictionary(ies), the more it is considered relevant. A relevancy mark may be associated with each term, proportionate to the redundancy of the term. More details about relevancy marks are given hereinafter.

A lexical field is thereby built for each root term in connection with the corresponding web service, the lexical field including all relevant terms found during the dictionary search.

The lexical field may be further enriched by the Lexical field builder through the use of ontologies in connection with the domain at stake. More precisely, for each root term the Lexical field builder searches the available ontology(ies) for at least one (and possibly a plurality of) relevant concept(s) the root term refers to, directly or indirectly.

If relevant concepts are found by the Lexical field builder during this ontology search, the Lexical field builder follows semantic links declared in the ontology(ies) from the relevant concept to other relevant concepts or resources (class, property or instance), gradually leading to relevant terms semantically linked to the root term.

New relevant terms may thereby be found by the Lexical field builder through the ontology search, and included in the lexical field. Terms already found during the dictionary search may be not taken into account, or their relevancy mark may be raised (see hereinafter).

The relevancy mark associated with each relevant term may be regarded as an estimation of the probability for this term to actually belong to the lexical field in connection with the domain at stake. Therefore, the relevancy mark may be defined as a number comprises between 0 and 1 (i.e. from 0% probability to 100% probability), built as follows:

- each root term is associated with a relevancy mark of 1 (100%);
- each new term found during the dictionary and/or ontology search(es) is associated with a relevancy mark depending upon:

  ■ the relevancy mark of the relevant term it is linked to within the lexical field (cascade relevancy), and
  ■ the type of link between the terms : synonym, subsumption, class equivalence, etc.).

From a mathematical point of view, the relevancy mark of a relevant term may be calculated by the Lexical field builder through a series formula, as follows:

$$(1) \qquad R_{N+1} = R_N \times K_{N+1}$$

Where:

N is the iteration number ($N$=0 corresponds to no iteration, i.e. to the root term);
$R_N$ is the relevancy mark of the relevant term found in iteration N
($R_0$ =1);
$R_{N+1}$ is the relevancy mark of the relevant term found in iteration
N+1 in connection with relevant term found in iteration N;
$K_{N+1}$ is a coefficient (comprised between 0 and 1) associated with
the type of link between relevant term found in iteration N and relevant term found in iteration N+1 ;

For example, let us assume that a relevant term found at iteration N is associated with a relevant mark of 0,9. At iteration N+1, a synonym to the term is found. Coefficient K for a synonym link is supposed to be equal to 0,3.

Accordingly, the relevancy mark $R_{N+1}$ of the term found at iteration N+1 is set to 0,27 as calculated by the Lexical field builder through formula (1):

$$R_{N+1} = R_N \times K_{N+1} = 0,9 \times 0,3 = 0,27 .$$

In a preferred embodiment, when a term already included in the lexical field (e.g. during the dictionary search) is found again (e.g. during the ontology search), its relevancy mark may be raised, for example in function of the former relevancy of the term as memorized in the lexical field and the relevancy of the same term as calculated in the new search according to formula (1).

In one embodiment, the new relevancy mark may be calculated by the Lexical field builder through the following formula:

$$(2) \qquad\qquad R'' = 1 - (1 - R) \times (1 - R')$$

Where:

R is the former relevancy mark of the term as memorized in the lexical field;

R' is the relevancy of the same term as calculated in the new search according to formula (1);

R'' is the new relevancy mark of the term.

For example, let us assume that a relevant term is memorized within the lexical field associated with a relevancy mark $R$ of 0,6, and the term is found again during a new search with a relevancy mark R' of 0,5.

Accordingly, the new relevancy mark $R''$ of the term as amended to take the matching of the new search into account is set to 0,8, as calculated according to formula (2):

$$R'' = 1 - (1 - R) \times (1 - R') = 1 - (1 - 0,6) \times (1 - 0,5) = 1 - (0,4 \times 0,5) = 0,8 \,.$$

Once the lexical field has been built for a given root term, the operations are repeated for each root term until all root terms have been taken into account, whereby a list of lexical field each corresponding to a root term are made available.

A selection of the most relevant terms of each lexical field may then be picked up by the Lexical field builder to build a more general semantic referential including a list of relevant terms delineating the lexical field of the domain concerned by the web service at stake.

For example, all relevant terms having a relevancy mark greater than a predetermined value (e.g. 0,9) are selected in each lexical field and added to the semantic referential.

The above-disclosed method allows automated retrieval of a set of relevant terms describing a service, thereby increasing efficiency of the discovery of a web service subsequent to a request made by a user in natural language, not only from a quantitative point of view (time spent for building the lexical fields is dramatically cut), but also from a qualitative point of view (omissions of terms, due to weak human memory capabilities with respect of machine ones, are limited).

**Claims**

1. Method for building a semantic referential gathering semantic descriptions of web services, said method comprising the steps of:

   - providing at least one root term selected from a semantic description of at least one web service,
   - providing at least one dictionary of synonyms and/or definitions,
   - searching in the dictionary for relevant terms semantically linked to the root term;
   - including said relevant terms in a lexical field in connection with said web service.

2. Method according to claim 1, further comprising the steps of:

   - providing at least one ontology in connection with a domain which said web service belongs to,
   - searching said ontology for at least one relevant concept corresponding to the root term,
   - following semantic links declared in said ontology from said relevant concept to other relevant concepts, leading to relevant terms semantically linked to the root term;
   - including said relevant terms in the lexical field.

3. Method according to claim 1 or 2, wherein each relevant term is associated to a relevance mark.

4. Method according to claim 3, wherein the relevance mark is a number comprised between 0 and 1, and corresponds to the probability for the term to actually belong to the lexical field.

**5.** Method according to claim 4, wherein:

- each root term is associated with a relevancy mark of 1;
- each new relevant term found during the dictionary and/or ontology search(es) is associated with a relevancy mark depending upon:

■ the relevancy mark of the relevant term it is linked to within the lexical field, and
■ the type of link between the linked relevant terms.

**6.** Method according to claim 5, wherein said link between relevant terms is one of the following: synonym, subsumption, class equivalence.

**7.** Method according to any of claims 3-6, wherein the relevancy mark of a relevant term is calculated by the following formula:

$$R_{N+1} = R_N \times K_{N+1}$$

Where:

N is the number of iterations number after which the relevant term is found $N = 0$ corresponds to the root term;
$R_N$ is the relevancy mark of the relevant term found in iteration N ($R_0 = 1$);
$R_{N+1}$ is the relevancy mark of the relevant term found in iteration N+1 in connection with relevant term found in iteration N;
$K_{N+1}$ is a coefficient, comprised between 0 and 1, associated with the type of link between relevant term found in iteration N and relevant term found in iteration N+1 ;

**8.** Method according to any of claims 4-7, wherein the relevancy mark of a relevant term found twice in distinct searches is raised according to the following formula:

$$R'' = 1 - (1 - R) \times (1 - R')$$

Where:

R is the former relevancy mark of the term as memorized in the lexical field;
R' is the relevancy of the same relevant term found in the new search;

**9.** Method according to any of the preceding claims, further comprising the steps of selecting a list of relevant terms in at least one lexical field and adding the selected terms to a semantic referential in connection with the web service.

**10.** Method according to any of the preceding claims, implemented as a computer program on a computer system.

**Amended claims in accordance with Rule 137(2) EPC.**

**1.** Method for building a semantic referential gathering semantic descriptions of web services, said method comprising the steps of:

- providing at least one root term selected from a semantic description of at least one web service,
- providing at least one dictionary of synonyms and/or definitions,
- conducting an iterative search in the dictionary for relevant terms semantically linked to the root term;
- for each term found during the search, providing a relevancy mark depending upon the redundancy of the term during the search,
- including said relevant terms in a lexical field in connection with said web service.

**2.** Method according to claim 1, further comprising the steps of:

- providing at least one ontology in connection with a domain which said web service belongs to,
- searching said ontology for at least one relevant concept corresponding to the root term,
- following semantic links declared in said ontology from said relevant concept to other relevant concepts, leading to relevant terms semantically linked to the root term;
- including said relevant terms in the lexical field.

**3.** Method according to claim 1 or 2, wherein the relevance mark is a number comprised between 0 and 1.

**4.** Method according to any of claims 1-3, wherein:

- each root term is associated with a relevancy mark of 1;
- each new relevant term found during the dictionary and/or ontology search(es) is associated with a relevancy mark depending upon:

  ■ the relevancy mark of the relevant term it is linked to within the lexical field, and
  ■ the type of link between the linked relevant terms.

**5.** Method according to claim 4, wherein said link between relevant terms is one of the following: synonym, subsumption, class equivalence.

**6.** Method according to any of claims 3-6, wherein the relevancy mark of a relevant term is calculated by the following formula:

$$R_{N+1} = R_N \times K_{N+1}$$

Where:

$N$ is the number of iterations number after which the relevant term is found;
$N=0$ corresponds to the root term;
$R_N$ is the relevancy mark of the relevant term found in iteration N ($R_0$=1);
$R_{N+1}$, is the relevancy mark of the relevant term found in iteration N+1 in connection with relevant term found in iteration N;
$K_{N+1}$ is a coefficient, comprised between 0 and 1, associated with the type of link between relevant term found in iteration N and relevant term found in iteration N+1;

**7.** Method according to any of claims 1-6, wherein the relevancy mark of a relevant term found twice in distinct searches is raised according to the following formula:

$$R'' = 1 - (1 - R) \times (1 - R')$$

Where:

$R$ is the former relevancy mark of the term as memorized in the lexical field;
$R'$ is the relevancy of the same relevant term found in the new search;

**8.** Method according to any of the preceding claims, further comprising the steps of selecting a list of relevant terms in at least one lexical field and adding the selected terms to a semantic referential in connection with the web service.

**9.** Method according to claim 8, wherein the terms of the lexical field to be added to the semantic referential are selected if their relevancy mark is greater than a predetermined value.

**10.** Method according to any of the preceding claims, implemented as a computer program on a computer system.

FIG.1

FIG.2

European Patent Office

**EUROPEAN SEARCH REPORT**

Application Number

EP 07 29 1173

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 835 417 A (ALCATEL LUCENT [FR]) 19 September 2007 (2007-09-19) * abstract; figure 2 * * paragraph [0010] - paragraph [0014] * * paragraph [0023] - paragraph [0033] * ----- | 1-10 | INV. G06F17/30 |
| X | KUNAL VERMA ET AL: "METEOR-S WSDI: A Scalable P2P Infrastructure of Registries for Semantic Publication and Discovery of Web Services" INFORMATION TECHNOLOGY AND MANAGEMENT, KLUWER ACADEMIC PUBLISHERS, BO, vol. 6, no. 1, 1 January 2005 (2005-01-01), pages 17-39, XP019207721 ISSN: 1573-7667 * the whole document * ----- | 1-10 | |
| X | US 2007/156622 A1 (AKKIRAJU RAMA K [US] ET AL) 5 July 2007 (2007-07-05) * abstract; figures 1,3 * * paragraph [0063] - paragraph [0069] * ----- | 1-10 | |
| X | US 2006/136428 A1 (SYEDA-MAHMOOD TANVEER [US]) 22 June 2006 (2006-06-22) * abstract; figures 1,3,6 * * paragraph [0029] * ----- | 1-10 | TECHNICAL FIELDS SEARCHED (IPC) G06F |
| X | LIYANG YU ET AL: "An indexation and discovery architecture for semantic web services and its application in bioinformatics" GRANULAR COMPUTING, 2006 IEEE INTERNATIONAL CONFERENCE ON ATLANTA, GA, USA 10-12 MAY 2006, PISCATAWAY, NJ, USA,IEEE, 10 May 2006 (2006-05-10), pages 744-749, XP002427401 ISBN: 1-4244-0134-8 * the whole document * ----- | 1-10 | |

The present search report has been drawn up for all claims

| Place of search | Date of completion of the search | Examiner |
|---|---|---|
| Berlin | 9 January 2008 | Nazzaro, Antonio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 29 1173

This annex lists the patent family members relating to the patent documents cited in the above-mentioned European search report.
The members are as contained in the European Patent Office EDP file on
The European Patent Office is in no way liable for these particulars which are merely given for the purpose of information.

09-01-2008

| Patent document cited in search report | | Publication date | Patent family member(s) | Publication date |
|---|---|---|---|---|
| EP 1835417 | A | 19-09-2007 | NONE | |
| US 2007156622 | A1 | 05-07-2007 | NONE | |
| US 2006136428 | A1 | 22-06-2006 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. BERNERS-LEE et al.** *Sci. Am.,* 2001, vol. 279, 34-43
- **D. BRICKLEY et al.** RDF Vocabulary Description Language 1.0: RDF Schema, World Wide Web Consortium. *Recommendation REC-rdf-schema,* 2004

- **F. VAN HARMELEN.** *IEEE intelligent system,* 2002, 70
- Formal ontology in conceptual analysis and knowledge representation. **T.R GRUBE,R.** Towards principles for the design of ontologies used for a knowledge sharing. Kluwer academic publishers, 1993